# EUROPEAN PATENT SPECIFICATION

(11) **EP 2 963 519 B1**
(45) Date of publication and mention of the grant of the patent: **28.09.2016**
(21) Application number: 14382252.6
(22) Date of filing: 01.07.2014
(51) Int. Cl.: G05D 1/10

(54) **Mobile unmanned aerial vehicle infrastructure and management system and related method**
Mobiles Infrastruktur- und Verwaltungssystem für ein unbemanntes Luftfahrzeug und zugehöriges Verfahren
Infrastructure mobile de véhicule aérien sans pilote et système de gestion et procédé associé

(43) Date of publication of application: 06.01.2016
(73) Proprietor: The Boeing Company, Chicago, IL 60606-1596 (US)
(72) Inventor: Esteban Campillo, David, 28042 Madrid (ES); Casado Magaña, Enrique Juan, 28042 Madrid (ES); Scarlatti, David, 28042 Madrid (ES); Maza Alcañiz, Ivan, 11300 La Linea de la Concepcion (Cádiz) (ES); Caballero Benitez, Fernando, 41003 Sevilla (ES); Ragel de la Torre, Ricardo, 41003 Sevilla (ES)
(74) Representative: Ungria López, Javier

(56) References cited:
- EP-A2- 2 336 801
- EP-A2- 2 515 147

## Description

### FIELD OF THE DISCLOSURE

The present disclosure generally relates to deployment and operation of a mobile unmanned aerial vehicle (UAV) infrastructure, and more specifically to methods for deploying a mobile UAV infrastructure and management system to one or more areas to facilitate operation of one or more unmanned aerial vehicles (UAVs).

### BACKGROUND

Continuous operations with autonomous UAVs is an ongoing problem to be solved. Currently, missions are being operated with single expensive UAVs in large areas launched from a fully dedicated "permanent" command and control station with the UAVs having to fly back to the launch site to refuel, reenergize or repair before continuing with the current mission. The immobility of the UAV support infrastructure, i.e., launch site, drastically reduces the operation efficiency of the UAV and therefore of the missions carried out as the UAVs are unable to provide detailed, close and continuous information from a particular area.

As such, current UAV operations rely on stationary deployment and acquisition platforms that do not provide for long-term mission support and operational life as the UAVs are limited by the need to return to the launch site to refuel, recharge or repair equipment.

The mobile unmanned aerial vehicle (UAV) infrastructure and management system described herein provides a solution for operating one or more, i.e., "multiple", UAVs for extended operation times by providing an infrastructure and management system to support acquisition and recharging of the UAVs. A method for deplaying portable landmarks for robotic vehicles is disclosed in EP 2 336 801 A2.

The mobile UAV infrastructure and management system solves the limitations in current UAV missions in terms of the available payload and operation time of the UAVs operating in remote or hostile areas where no airport like infrastructure exists. The mobile UAV infrastructure and management system disclosed herein promotes UAV swarming, the use of multiple UAVs, and a mixed fleet of UAVs in an efficient manner by allocation of a moveable or mobile landing platform and associated communication and localization elements for managing arrival and departure of one or more UAVs based on the current traffic and availability of launch/recovery platforms.

### SUMMARY

The subject matter disclosed herein provides a unique and flexible solution to the deployment of a mobile or portable infrastructure and management system to support unmanned vehicle operations in multiple areas that may be considered remote or hostile.

In one embodiment there is disclosed a method for deploying a mobile unmanned aerial vehicle (UAV)infrastructure and management system for control and management of one or more unmanned aerial vehicles (UAVs), characterized in that the method comprises defining a first area for deployment of the mobile UAV infrastructure and management system; deploying in the first area, by means of unmanned ground vehicles, the mobile UAV infrastructure and management system including a landing platform to facilitate operational readiness of the UAV; a plurality of radio beacons for localization of the unmanned aerial vehicle with the mobile UAV infrastructure and management system; and a command and control station for communication between the mobile UAV infrastructure and management system and the unmanned aerial vehicle; and if needed, defining a second area for deployment of the mobile UAV infrastructure and management system; and deploying in the second area, by means of unmanned ground vehicles, the mobile UAV infrastructure and management system.

In other embodiment there is disclosed a mobile unmanned aerial vehicle (UAV) infrastructure and management system for control and management of one or more unmanned aerial vehicle (UAVs), characterized in that the system comprises a landing platform to facilitate operational readiness of the unmanned aerial vehicle; a plurality of radio beacons for localization of the unmanned aerial vehicle with the mobile UAV infrastructure and management system; a command and control station for communication between the mobile UAV infrastructure and management system and the unmanned aerial vehicle; and an unmanned ground vehicle for deployment of the mobile UAV infrastructure and management system to a first area, and if needed, for deployment of the mobile UAV infrastructure and management system to a second area.

These and other embodiments will become readily apparent to those skilled in the art from the following detailed description of the embodiments disclosed having reference to the attached figures, the subject matter not being limited to any particular embodiment(s) disclosed.

### BRIEF DESCRIPTION OF THE DRAWINGS

Figure 1.- Shows a schematic view of a deployment of a mobile UAV infrastructure and management system carried out by multiple Unmanned Ground Vehicles (UGVs).
Figure 2.- Shows a schematic view of one or more UAVs returning to an area of the mobile UAV infrastructure and management system using an on-board GPS.
Figure 3.- Shows a schematic view of a UAV changing localization mode from a GPS global localization system to a radio beacon local positioning system of the mobile UAV infrastructure and management system.
Figure 4.- Shows a schematic view of the command and control station allocating a landing platform to one or more UAVs based on current UAV traffic and availability of platforms.
Figure 5.- Shows a schematic view of a UAV changing localization mode from a radio beacons local positioning system to a relative localization system based on visual markers and ultrasonic devices upon arrival at the mobile UAV infrastructure and management system.

### DETAILED DESCRIPTION

Exemplary embodiments will now be described with references to the accompanying figures, with like reference numerals referring to like elements throughout. The terminology used in the description is not intended to be interpreted in any limited or restrictive manner, simply because it is being utilized in conjunction with a detailed description of certain embodiments. Furthermore, various embodiments (whether or not specifically described herein) may include novel features, no single one of which is solely responsible for its desirable attributes or which is essential to practicing the subject matter described herein.

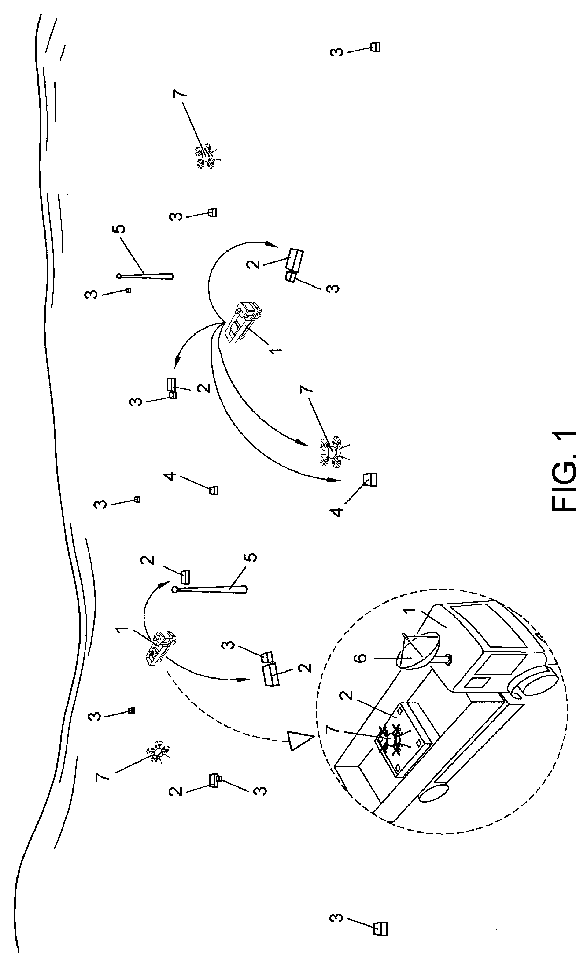

As shown in Figure 1, in one embodiment, the transport and deployment of a mobile UAV infrastructure and management system as disclosed herein including landing platform (2) and associated communication and localization elements such as radio beacons (3), command and control stations (C2) (4), antennae (5,6), and one or more unmanned aerial vehicles (UAVs) (7) to one or more areas is carried out by unmanned ground vehicles (UGVs) (1). In this regard, the UAVs may be deployed with other elements of the mobile UAV infrastructure and management system by the UGVs, or the UAVs may be remotely and/or autonomously deployed to the one or more areas independent of the UGVs where the UAVs carry out their mission objectives.

Due to the mobility of UGVs, transport and deployment of the mobile UAV infrastructure and management system including the landing platforms to one or more areas may be accomplished in a relatively fast and efficient manner. Although the methods disclosed herein has been disclosed as provided mobile operations for unmanned air vehicles, deployment of similar articles or apparatus such as ground vehicles are within the scope of the disclosure.

The UGVs may be provided with means for loading and unloading the different elements that form a mobile UAV infrastructure and management system, such as, the landing platform, the radio beacons, the command and control station (C2), antennae, and optionally the UAVs. In this regard, the means for loading and unloading the elements might include cranes, magnets, etc. The UGVs could further comprise a ramp in order to facilitate the loading and unloading operation.

The UGVs may also comprise proximity sensors, positioning measurement systems, cameras, etc, for assisting in the loading and unloading operation of the different elements of the mobile UAV infrastructure and management system. Proximity sensors, cameras and positioning measurement systems provide a visual picture for increased situational awareness during the attachment or uploading of the landing platform from one location, and positioned on the UGV's trailer or body. The mobile UAV infrastructure and management system is then deployed to a different location, where during the unloading operation of the various elements, the proximity sensors, cameras and positioning measurement systems facilitate the positioning of the platform on the ground assuring the safe and efficient deployment of the platform and other elements of the mobile UAV infrastructure and management system.

The UGVs may further comprise means for automatically securing the mobile UAV infrastructure and management system and associated elements during the transport operation, as for example magnets on the base of a trailer of the UGVs. All the operations of the UGVs may be preprogrammed into the UGVs for complete autonomous operation or teleoperated by a user from a remote control station.

The position and number of the different elements (landing platforms, radio beacons and command and control stations) deployed is selected for achieving optimal localization and ground based communication with the UAVs and the mobile UAV infrastructure and management system. Such determined efficiency of the mobile UAV infrastructure and management system will depend at least on the terrain encountered in the area.

In one embodiment, a minimum of four radio beacons will be deployed in the area, as four is generally accepted as the minimum number of signals required for an accurate estimation of the position of the unmanned air vehicles. Those skilled in the art will understand that fewer or more radio beacons may be utilized or a similar technology may be employed depending on various factors including among other things, operational parameters, terrain, etc.

The command and control stations (CCSs) or command and control ground stations (CCGS) or (C2) provide command and control communications between the UAVs and the ground stations via data transmissions for operational command and control of the UAVs. The command and control facilitates command, control, and management of the one or more UAVs deployed by the UGVs of the mobile UAV infrastructure and management system to ensure UAV operational readiness and mission success. The CCCs may be placed on the ground in the selected area, attached to the landing platforms, or on the UGVs, etc.

In one embodiment, the mobile UAV infrastructure and management system includes the deployment of a remote communication systems, such a satellite communication systems, with a remote control center from which data from the deployment and operation of the mobile UAV infrastructure and management system is provided to facilitate operational control and supervision of the deployment operation. The remote communication means may be placed on the ground or on the UGVs (for example, a parabolic antenna attached to the roof of the UGV).

The landing platforms may be deployed to facilitate operational readiness of the one or more UAVs. The landing platforms may be deployed to maintain a distance relative to each other that provides a safety radius during operation of the UAVs. The safety radius may be determined by a distance needed for the unmanned air vehicle to take-off and land.

The deployment of the radio beacons may be configured to permit or allow a trilateration of the unmanned air vehicles in an airport control area of the mobile UAV infrastructure and management system, the airport control area being defined by a radio range of the radio beacons. More specifically a trilateration is achieved when the centroid of the positions of the landing platforms has a horizontal dilution of precision (HDOP) value of about 1.

Deployment of the radio beacons may comprise calculating a centroid of the positions of the deployed landing platforms, the centroid having a horizontal dilution of precision (HDOP) value of about 1; calculating a radius of a circle centered in the centroid according to the radio range of the radio beacons, a required localization accuracy in vicinity of the landing platforms, a size of a control area around the mobile UAV infrastructure and management system where the localization service of the UAVs is provided, the control area being defined by the radio range of the radio beacons; and, placing the radio beacons equally spaced in the calculated circle.

A method for managing the mobile unmanned aerial vehicle (UAV) infrastructure and management system previously described is also disclosed. The method comprises deploying at least one unmanned aerial vehicle, determining the position of the unmanned aerial vehicle depending on the distance of the unmanned aerial vehicle to the landing platforms, assigning a landing platform for the unmanned aerial vehicle by means of the command and control station, and landing the unmanned aerial vehicle in the assigned landing platform.

The method may calculate the position of the unmanned air vehicle by means of a global position system (GPS) placed onboard the unmanned air vehicle when the unmanned air vehicle is out of the control area. As indicated above, the control area is determined by a radio range of the airport area radio beacons. On the other hand, the position of the unmanned air vehicle may be determined by means of a local position system comprising the radio beacons when the unmanned air vehicle is inside the control area.

In one method of the mobile UAV infrastructure and management system may switch from the global position system to the local position system based on the radio beacons for calculating the position of the unmanned air vehicle when the unmanned air vehicle is inside of the airport control area and an estimated position of the UAV calculated by the global position system and an estimated position of the UAV calculated by the radio beacons is less than a predetermined value during more than a predetermined period of time. More specifically, the switching is carried out when the euclidean distance of the mentioned estimations is less than a predetermined value during a predetermined period of time. The computation of the estimated position of the UAV calculated by the radio beacons may run in parallel with the use of the GPS by the UAVs.

The method may further switch from the local position system to a relative localization systems based on visual markers and ultrasonic devices for calculating the position of the unmanned air vehicle when the unmanned air vehicle is in proximity to the landing platforms and an estimated position of the UAV calculated by the local position system and an estimated position of the UAV calculated by the relative localization systems is less than a predetermined value during more than a predetermined period of time. More specifically, the switching is carried out when the euclidean distance of the mentioned estimations is less than a predetermined value during a predetermined period of time. The computation of the estimated position of the UAV calculated by the relative localization system may run parallel to the use of the GPS by the UAVs.

In order to assign a landing platform to an unmanned air vehicle, the command and control station considers, the position of each unmanned air vehicle, current unmanned air vehicles traffic and availability of each of the landing platforms.

Automated air traffic management procedures can be simplified due to the VTOL capabilities of the vehicles. Allocation of aerial vehicles to platforms may be done in a first step based on simple metrics such as the distance between vehicles (the vehicle goes to the closest platform). On the other hand, trajectory conflicts may be solved changing altitudes of the vehicles involved in the potential collision. Additionally, in some circumstances both allocation/conflicts can be simultaneously solved with algorithms that can compute optimal solutions during the operation of the system.

As indicated above, the deployment of the landing platforms, radio beacons, command and control stations, antenna, and the unmanned air vehicles may be automatically carried out by means of unmanned ground vehicles. An important aspect of the mobile UAV infrastructure and management system is that the positions of the platforms are capable of being changed during the execution of any mission. In this regard, the entire mobile UAV infrastructure and management system may be moved during the mission and the unmanned aerial vehicles may adapt to the change via reception of a communication reporting the location of the new centroid of the landing platforms. These changes in the location of the entire portable airport infrastructure to address new threats or mission parameters are detected close to the initial location. The information related to the changes in the location of the airport is exchanged between the UAVs and the command and control stations by means of conventional data links. These data links can be established by direct communication or by satellite communication between both parts.

In a method related to the mobile UAV infrastructure and management system a first area is defined in which the mobile UAV infrastructure and management system is going to be deployed. In this regard, deployment of the mobile UAV infrastructure and management system may be in a relatively remote area. Such remote areas are generally places where due to geographic, economic or political reasons access to the area is difficult and construction of a permanent airport infrastructure is even more difficult.

In one embodiment, the unmanned aerial vehicles are vertical take-off and landing unmanned aerial vehicles.

In other embodiment, the deployment of the mobile UAV infrastructure is selected between a teleoperated deployment from a remote control station, an autonomous deployment and any combination thereof.

Once the remote area has been defined, the autonomous deployment of the components that form the mobile UAV infrastructure and management system is carried out. Figure 1 shows a schematic view of a deployment stage carried out by a multiple unmanned ground vehicles (UGVs) (1) (truck or similar transport carrier). The UGVs are capable of transport and deployment of landing platforms (2), radio beacons (3), command and control stations (4), antennae (5), (6), and one or more UAVs (7) about a first designated area.

Each landing platform (2) for facilitating operational readiness of one or more UAVs is transported on the body of the UGV (1), and is equipped with one or more radio beacons (3) for communicating its relative localization to one or more UAVs (7). Other radio beacons (3) that are independent of the landing platform (2) and capable of communicating in a similar manner with UAVs (7) are deployed strategically around the area in order to create a confinement or control area so that the UAVs (7) may be positioned using the plurality radio beacons (3). In one embodiment, the UGVs (1) are remotely sent and controlled from a permanent or mobile control infrastructure. The management of the UGVs is carried out by remote control means as for example, with the assistance of satellite communications antennae (5) placed on the ground and/or parabolic antennae (6) placed on the roof of the UGVs (1). Alternatively, the UGVs (1) may be programmed to autonomous traverse to the designated area to deploy the mobile UAV infrastructure and management system.

Following deployment of the radio beacons (3), the landing platforms (2), as well as the command and control stations (4) in the first area, the UGVs (1) may deploy one or more (plurality) UAVs (7). The UVAs (7) may take-off directly from the UGVs (1) under remote control to begin a mission from the mobile UAV infrastructure and management system. Each UAV (7) establishes a data link with the command and control stations (4) in order to exchange information, for example information relative to the location of the mobile UAV infrastructure and management system and the state of the UAV (7).

When a UAV (7) performing a mission detects that some kind of tune up is needed, as for example, when it detects a low battery level or when it needs to replace or repair a payload, the UAV (7) returns to the platform (2) positioned in the control area (8) of the mobile UAV infrastructure and management system using the on-board GPS. In this way, the mobile UAV infrastructure and management system, and more specifically, the platform ensures or facilitates the operational readiness of the one or more UAVs.

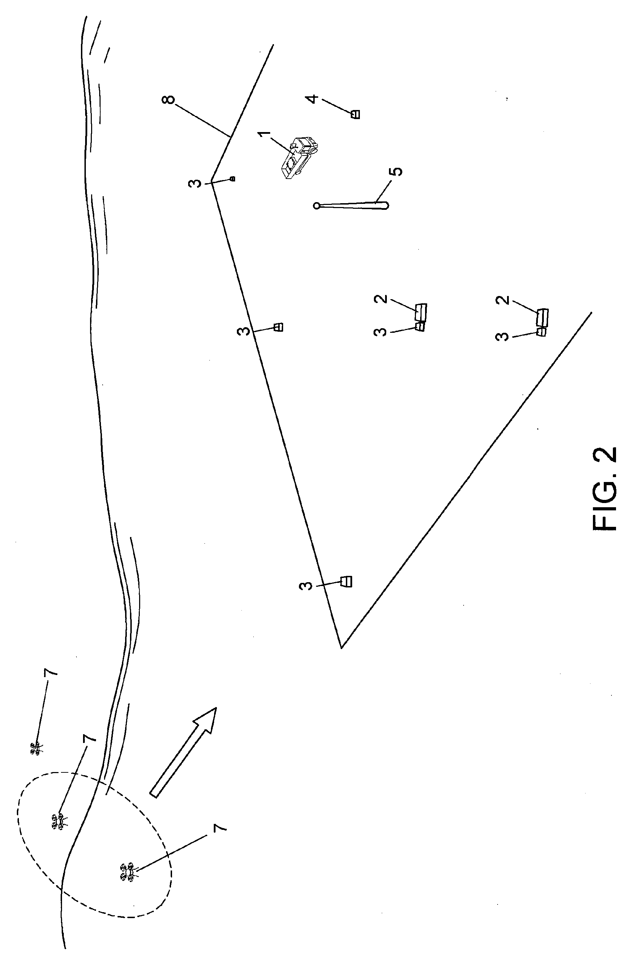

As shown in Figure 2, when the UAVs (7) are beyond the communication range of a control area (8), which is determined by the radio range of the radio beacons (3), the UAVs are guided by GPS. The GPS location of the mobile UAV infrastructure and management system is reported to the UAVs through the data link during the mission. Accordingly, the mobile UAV infrastructure and management system may be moved by the UGVs (1) from one location or first area to another location or second area without disruption of the communication of the UAVs and the C2s to facilitate a continuous uninterrupted mission.

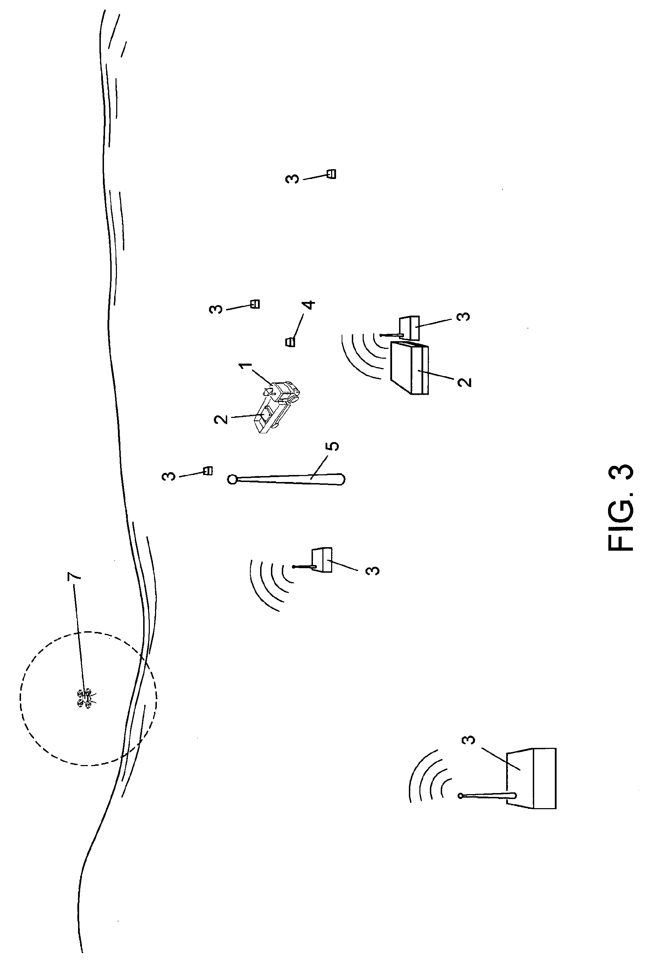

Figure 3 illustrates the arrival of a UAV (7) to the mobile UAV infrastructure and management system, i.e., once the UAV (7) enters into the confinement or control area (8) created by the radio beacons (3) as determined by the range of the radio beacons (3). In this regard, the UAV localization system changes from the GPS global localization to a radio beacon local positioning. Switching between the global position system and the radio beacon localization system is carried out when the Euclidean distance between the estimated position of the UAV calculated by the GPS on board the UAV and the estimated position of the UAV calculated by the radio beacons is less than a predetermined value during more than a given period of time. The benefits of using a local positioning system based on the airport area radio beacons are that the relative localization of the UAVs (7) in the control area (8) of the mobile UAV infrastructure and management system has an increased accuracy for collision avoidance purposes, and as the position of the platforms (2) is dynamic and can change with time the UAV (7) receives the current position of the landing platforms (2) relative to the UAV.

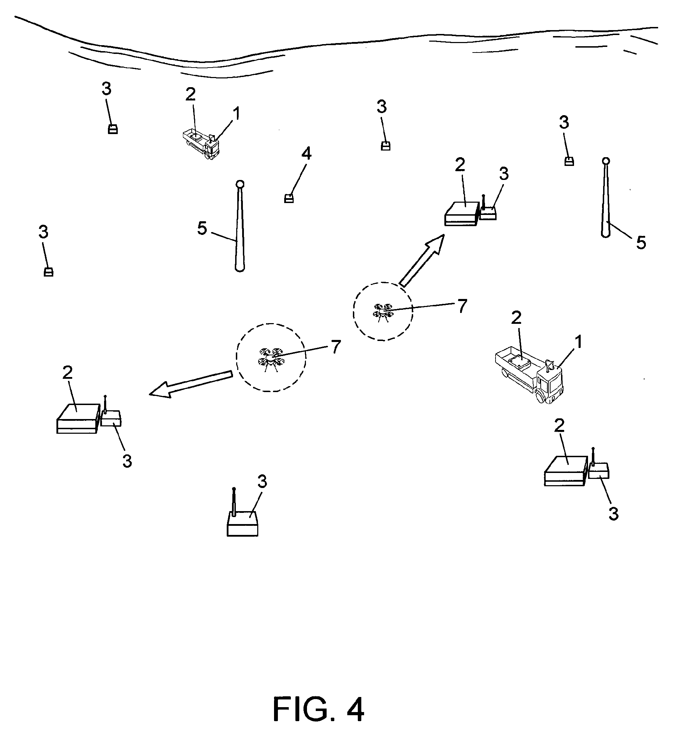

As shown in Figure 4, the UAV (7) communicates with the command and control station (4), by means of the data link to facilitate landing at a landing platform (2) based on the current aerial traffic and availability of platforms (2). The UAV (7) then proceeds to the designated platform (2).

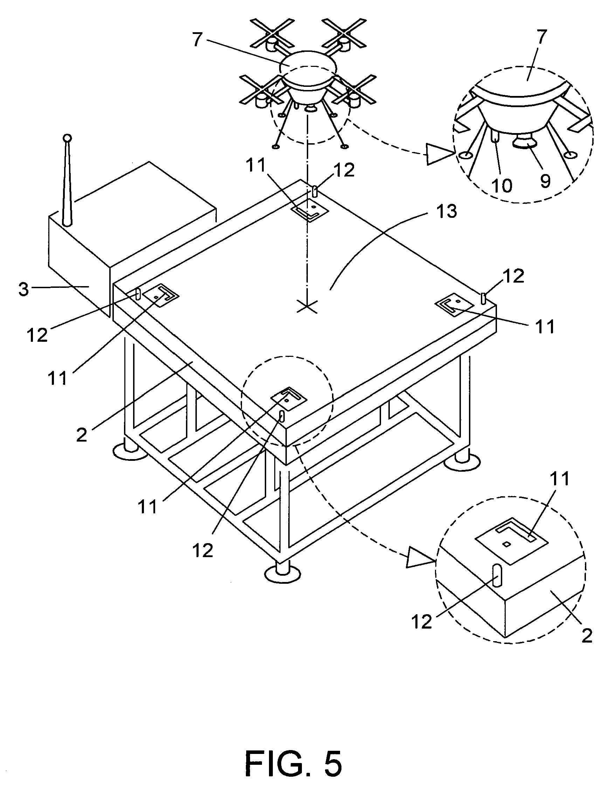

As the platforms (2) may be sized relatively small to allow easy transportation and deployment, the typically UAV landing maneuver requires increased relative localization accuracy compared to that provided by the radio beacons (3). As such, once the UAV (7) is in the vicinity of the landing platform (2) localization may change from the radio beacon localization system to a localization system based on visual markers and ultrasonic devices, see Figure 5. For example, the UAV (7) may be provided with visual cameras (9) for detecting visual markers and ultrasonic sensors (10) for receiving ultrasonic signals, while the platform (2) is provided with fiducial or visual markers (11) and ultrasonic transmitters (12).

The visual cameras (9) provide situational awareness for remote operator of the UAV or UAV system components to assist in landing the UAV at the platform (2). The fiducial markers (11) and the ultrasonic transmitters (12) in the landing platform (2) may be placed at the corners of a landing area (13) of the landing platform (12) to delimit the dimensions thereof and its position with respect to the UAV (7). The localization mode switching between the radio beacons (3) and the relative localization system based on visual markers (11), camera (9), and ultrasonic devices (10), (12) is carried out when the Euclidean distance between the estimated position of the UAV (7) calculated by the radio beacons (3) and the estimated position of the UAV (7) calculated by the relative localization system is less than a predetermined value during more than a given period of time. The benefits of using a relative localization system based on visual markers (11) and ultrasonic devices (10), (12) is that the positioning of the UAVs (7) has an increased accuracy and this is crucial for avoiding damages in the UAV (7) when landing on the landing area (13) of the landing platform (12).

When the UAV (7) lands, the on-board battery used for aerial and communication power may be automatically changed or the payload may be automatically replaced. This operation is not shown in the figures but in a particular embodiment, when the UAV (7) needs to automatically change its battery a bar disposed on the platform (12) would move the UAV (7) towards a conveyor belt disposed on the platform (12) which in turn would move the UAV (7) towards a device for battery changing. Then the battery of the UAV would be automatically replaced. Then the UAV (7) would then be ready to take-off again and continue performing its cooperative mission.

The description of the different embodiments and implementations has been presented for purposes of illustration and description, and is not intended to be exhaustive or limited to the implementations in the form disclosed. Many modifications and variations will be apparent to those of ordinary skill in the art. Further, different embodiments and implementations may provide different attributes as compared to other embodiments and implementations. The embodiments or implementations selected are chosen and described in order to best explain the principles of the implementations, the practical application, and to enable others of ordinary skill in the art to understand the disclosure for various implementations with various modifications as are suited to the particular use contemplated. This written description uses examples to disclose various implementations, which include the best mode, to enable any person skilled in the art to practice those implementations, including making and using any devices or systems and performing any incorporated methods. The patentable scope is defined by the claims, and may include other examples that occur to those skilled in the art. Such other examples are intended to be within the scope of the claims if they have stages that do not differ from the literal language of the claims, or if they include equivalent stages with insubstantial differences from the literal languages of the claims.

## Claims

1. A mobile unmanned aerial vehicle (UAV) infrastructure and management system for control and management of one or more unmanned aerial vehicles (UAVs), **characterized in that** the system comprises:
at least one landing platform to facilitate operational readiness of the unmanned aerial vehicle;
a plurality of radio beacons for localization of the unmanned aerial vehicle with the mobile UAV infrastructure and management system;
at least a command and control station for communication between the mobile UAV infrastructure and management system and the unmanned aerial vehicle; and
at least an unmanned ground vehicle for deployment of the mobile UAV infrastructure and management system to a first area, and if needed, for deployment of the mobile UAV infrastructure and management system to a second area.

2. A mobile unmanned aerial vehicle infrastructure and management system, according to claim 1, **characterized in that** the distance between the landing platforms, when deployed, is higher than a safety radius determined by a minimum distance needed for the unmanned air vehicle to take-off and land.

3. A mobile unmanned aerial vehicle infrastructure and management system, according to claim 2, **characterized in that** the radio beacons are equally spaced in an area determined by a circle centered in a centroid of the positions of the deployed landing platforms having a horizontal dilution of precision less than 1, with a radius determined by the radio range of the radio beacons.

4. A mobile unmanned aerial vehicle infrastructure and management system, according to claim 3, **characterized in that** the mobile UAV infrastructure and management system further comprises remote communication systems for communicating with a remote control center that controls and supervises the deployment of the mobile UAV infrastructure and management system.

5. A mobile unmanned aerial vehicle infrastructure and management system, according to any of the preceding claims, **characterized in that** the unmanned aerial vehicles are vertical take-off and landing unmanned aerial vehicles.

6. Method for deploying the mobile unmanned aerial vehicle (UAV) infrastructure and management system described in any of the claims 1 to 5, **characterized in that** the method comprises:
defining a first area for deployment of the mobile UAV infrastructure and management system;
deploying in the first area, by means of unmanned ground vehicles, the mobile UAV infrastructure and management system including a landing platform to facilitate operational readiness of the unmanned aerial vehicle; a plurality of radio beacons for localization of the unmanned aerial vehicle with the mobile UAV infrastructure and management system; and a command and control station for communication between the mobile UAV infrastructure and management system and the unmanned aerial vehicle; and if needed,
defining a second area for deployment of the mobile UAV infrastructure and management system; and deploying in the second area, by means of unmanned ground vehicles, the mobile UAV infrastructure and management system.

7. Method for deploying a mobile unmanned aerial vehicle infrastructure and management system, according to claim 6, **characterized in that**, when more than one landing platforms are deployed, the landing platforms are deployed maintaining a distance from each other higher than a safety radius, the safety radius being determined by a distance needed for the unmanned aerial vehicle to take-off and land.

8. Method for deploying a mobile unmanned aerial vehicle infrastructure and management system, according to claim 6, **characterized in that** the deployment of the plurality of radio beacons comprises:
- calculating a centroid of the positions of the deployed landing platforms having a horizontal dilution of precision less than 1;
- calculating a radius of a circle centered in the centroid according to a radio range of the radio beacons, a required localization accuracy in vicinity of the landing platforms, a size of a control area around the mobile UAV infrastructure and management system where the localization service is provided, said control area being defined by the radio range of the radio beacons; and,
- placing the radio beacons equally spaced in the calculated circle.

9. Method for deploying a mobile unmanned aerial vehicle infrastructure and management system, according to any of the preceding claims, **characterized in that** the method further comprises deploying remote communication systems for the communication with a remote control center that controls and supervises the deployment of the mobile UAV infrastructure and management system.

10. Method for deploying a mobile unmanned aerial vehicle infrastructure and management system, according to any of the preceding claims, wherein the deployment of the mobile UAV infrastructure is selected between a teleoperated deployment from a remote control station, an autonomous deployment and any combination thereof.

## Patentansprüche

1. Mobiles Infrastruktur- und Verwaltungssystem für ein unbemanntes Luftfahrzeug (Unmanned Aerial Vehicle, UAV) zur Steuerung und Verwaltung von einem oder mehreren unbemannten Luftfahrzeugen (UAVs), **dadurch gekennzeichnet, dass** das System umfasst:
mindestens eine Landeplattform zum Ermöglichen der Betriebsbereitschaft des unbemannten Luftfahrzeugs;
eine Vielzahl von Funkbaken zur Lokalisierung des unbemannten Luftfahrzeugs mit dem mobilen Infrastruktur- und Verwaltungssystem für das UAV;
mindestens eine Kommando- und Kontrollstation zur Kommunikation zwischen dem mobilen Infrastruktur- und Verwaltungssystem für das UAV und dem unbemannten Luftfahrzeug; und
mindestens ein unbemanntes Bodenfahrzeug für die Aufstellung des mobilen Infrastruktur- und Verwaltungssystems für das UAV in einem ersten Bereich, und bei Bedarf, für die Aufstellung des mobilen Infrastruktur- und Verwaltungssystems für das UAV in einem zweiten Bereich.

2. Mobiles Infrastruktur- und Verwaltungssystem für ein unbemanntes Luftfahrzeug nach Anspruch 1, **dadurch gekennzeichnet, dass** die Distanz zwischen den Landeplattformen, wenn sie aufgestellt sind, größer als ein Sicherheitsradius ist, der durch eine Mindestdistanz bestimmt wird, die für den Start und die Landung des unbemannten Luftfahrzeug erforderlich ist.

3. Mobiles Infrastruktur- und Verwaltungssystem für ein unbemanntes Luftfahrzeug nach Anspruch 2, **dadurch gekennzeichnet, dass** die Funkbaken auf einer Fläche gleich beabstandet sind, die durch einen Kreis bestimmt wird, der um einen Zentroid der Positionen der aufgestellten Landeplattformen zentriert ist, der eine horizontale Verringerung der Genauigkeit von weniger als 1 aufweist, wobei der Radius durch den Funkbereich der Funkbaken bestimmt wird.

4. Mobiles Infrastruktur- und Verwaltungssystem für ein unbemanntes Luftfahrzeug nach Anspruch 3, **dadurch gekennzeichnet, dass** das mobile Infrastruktur- und Verwaltungssystem für das UAV des Weiteren Fernkommunikationssysteme zur Kommunikation mit einem entfernten Kontrollzentrum umfasst, das die Aufstellung des mobilen Infrastruktur- und Verwaltungssystems für das UAV steuert und überwacht.

5. Mobiles Infrastruktur- und Verwaltungssystem für ein unbemanntes Luftfahrzeug nach einem der vorhergehenden Ansprüche, **dadurch gekennzeichnet, dass** die unbemannten Luftfahrzeuge senkrecht startende und landende unbemannte Luftfahrzeuge sind.

6. Verfahren zum Aufstellen des mobilen Infrastruktur- und Verwaltungssystems für ein unbemanntes Luftfahrzeug (UAV), das in einem der Ansprüche 1 bis 5 beschrieben ist, **dadurch gekennzeichnet, dass** das Verfahren umfasst:
Definieren einer ersten Fläche zur Aufstellung des mobilen Infrastruktur- und Verwaltungssystems für ein UAV;
Aufstellen, auf der ersten Fläche, mithilfe von unbemannten Bodenfahrzeugen, des mobilen Infrastruktur- und Verwaltungssystems für ein UAV einschließlich einer Landeplattform zum Ermöglichen der Betriebsbereitschaft des unbemannten Luftfahrzeugs; einer Vielzahl von Funkbaken zur Lokalisierung des unbemannten Luftfahrzeugs mit dem mobilen Infrastruktur- und Verwaltungssystem für das UAV; und einer Kommando- und Kontrollstation zur Kommunikation zwischen dem mobilen Infrastruktur- und Verwaltungssystem für das UAV und dem unbemannten Luftfahrzeug; und, bei Bedarf,
Definieren einer zweiten Fläche zur Aufstellung des mobilen Infrastruktur- und Verwaltungssystems für ein UAV; und Aufstellen, mithilfe von unbemannten Bodenfahrzeugen, des mobilen Infrastruktur- und Verwaltungssystems für ein UAV auf der zweiten Fläche.

7. Verfahren zum Aufstellen eines mobilen Infrastruktur- und Verwaltungssystems für ein unbemanntes Luftfahrzeug nach Anspruch 6, **dadurch gekennzeichnet, dass**, wenn mehr als eine Landeplattform aufgestellt wird, die Landeplattformen so aufgestellt werden, dass eine Distanz zueinander gewahrt wird, die größer als ein Sicherheitsradius ist, wobei der Sicherheitsradius durch eine Distanz bestimmt wird, die für den Start und die Landung des unbemannten Luftfahrzeugs erforderlich ist.

8. Verfahren zum Aufstellen eines mobilen Infrastruktur- und Verwaltungssystems für ein unbemanntes Luftfahrzeug nach Anspruch 6, **dadurch gekennzeichnet, dass** die Aufstellung der Vielzahl von Funkbaken Folgendes umfasst:
Berechnen eines Zentroids der Positionen der aufgestellten Landeplattformen mit einer horizontalen Verringerung der Genauigkeit von weniger als 1;
Berechnen eines Radius eines Kreises, der um den Zentroid zentriert ist, gemäß einem Funkbereich der Funkbaken, einer erforderlichen Lokalisierungsgenauigkeit in der Nähe der Landeplattformen, einer Größe der Kontrollfläche rund um das mobile Infrastruktur- und Verwaltungssystem für ein UAV, auf der der Lokalisierungsdienst geboten wird, wobei die Kontrollfläche durch den Funkbereich der Funkbaken definiert wird; und
Anordnen der Funkbaken mit gleichem Abstand in dem berechneten Kreis.

9. Verfahren zum Aufstellen eines mobilen Infrastruktur- und Verwaltungssystems für ein unbemanntes Luftfahrzeug nach einem der vorhergehenden Ansprüche, **dadurch gekennzeichnet, dass** das Verfahren des Weiteren das Aufstellen von Fernkommunikationssystemen zur Kommunikation mit einem entfernten Kontrollzentrum umfasst, das die Aufstellung des mobilen Infrastruktur- und Verwaltungssystems für das UAV steuert und überwacht.

10. Verfahren zum Aufstellen eines mobilen Infrastruktur- und Verwaltungssystems für ein unbemanntes Luftfahrzeug nach einem der vorhergehenden Ansprüche, wobei das Aufstellen der mobilen UAV-Infrastruktur aus einer ferngesteuerten Aufstellung von einem entfernten Kontrollzentrum aus, einer autonomen Aufstellung und einer beliebigen Kombination daraus ausgewählt wird.

## Revendications

1. Infrastructure mobile de véhicule aérien sans pilote et système de gestion pour le contrôle et la gestion d'un ou de plusieurs véhicule(s) aérien(s) sans pilote, **caractérisés en ce que** le système comprend :
au moins une plate-forme d'atterrissage pour faciliter la disponibilité opérationnelle du véhicule aérien sans pilote ;
une pluralité de radiobalises pour la localisation du véhicule aérien sans pilote avec l'infrastructure mobile de véhicule aérien sans pilote et le système de gestion ;
au moins une station de commande et de contrôle pour la communication entre l'infrastructure mobile de véhicule aérien sans pilote et système de gestion et le véhicule aérien sans pilote ; et
au moins un véhicule terrestre sans pilote pour le déploiement de l'infrastructure mobile de véhicule aérien sans pilote et du système de gestion dans une première zone et, si nécessaire, pour le déploiement de l'infrastructure mobile de véhicule aérien sans pilote et du système de gestion dans une seconde zone.

2. Infrastructure mobile de véhicule aérien sans pilote et système de gestion selon la revendication 1, **caractérisés en ce que** la distance entre les plates-formes d'atterrissage, lorsqu'elles sont déployées, est supérieure au rayon de sécurité déterminé par une distance minimale nécessaire pour que le véhicule aérien sans pilote décolle et atterrisse.

3. Infrastructure mobile de véhicule aérien sans pilote et système de gestion selon la revendication 2, **caractérisés en ce que** les radiobalises sont uniformément espacées dans une zone délimitée par un cercle, centré dans un barycentre des positions des plates-formes d'atterrissage déployées possédant une diminution de la précision horizontale inférieure à 1, avec un rayon déterminé par la plage radio des radiobalises.

4. Infrastructure mobile de véhicule aérien sans pilote et système de gestion selon la revendication 3, **caractérisés en ce que** l'infrastructure mobile de véhicule aérien sans pilote et le système de gestion comprennent en outre des systèmes de communication à distance pour communiquer avec un centre de contrôle à distance qui contrôle et surveille le déploiement de l'infrastructure mobile de véhicule aérien sans pilote et du système de gestion.

5. Infrastructure mobile de véhicule aérien sans pilote et système de gestion selon l'une quelconque des revendications précédentes, **caractérisés en ce que** les véhicules aériens sans pilote sont des véhicules aériens sans pilote de décollage et d'atterrissage à la verticale.

6. Procédé de déploiement de l'infrastructure mobile de véhicule aérien sans pilote (UAV) et du système de gestion selon l'une des revendications 1 à 5, **caractérisé en ce que** le procédé comprend :
la délimitation d'une première zone pour le déploiement de l'infrastructure mobile de véhicule aérien sans pilote et du système de gestion ;
le déploiement dans la première zone, à l'aide de véhicules terrestres sans pilote, de l'infrastructure mobile de véhicule aérien sans pilote et du système de gestion comprenant une plate-forme d'atterrissage pour faciliter la disponibilité opérationnelle du véhicule aérien sans pilote, une pluralité de radiobalises pour la localisation du véhicule aérien sans pilote avec l'infrastructure mobile de véhicule aérien sans pilote et le système de gestion ; et une station de commande et de contrôle pour la communication entre l'infrastructure mobile de véhicule aérien sans pilote et le système de gestion et le véhicule aérien sans pilote ; et, si nécessaire,
la délimitation d'une seconde zone pour le déploiement de l'infrastructure mobile de véhicule aérien sans pilote et du système de gestion ; et le déploiement dans la seconde zone, à l'aide de véhicules terrestres sans pilote, de l'infrastructure mobile de véhicule aérien sans pilote et du système de gestion.

7. Procédé de déploiement d'une infrastructure mobile de véhicule aérien sans pilote et du système de gestion selon la revendication 6, **caractérisé en ce que**, lorsqu'il y a plusieurs plates-formes d'atterrissage déployées, les plates-formes d'atterrissage sont déployées en conservant une distance l'une par rapport à l'autre supérieure à un rayon de sécurité, le rayon de sécurité étant déterminé par une distance nécessaire pour que le véhicule aérien sans pilote décolle et atterrisse.

8. Procédé de déploiement d'une infrastructure mobile de véhicule aérien sans pilote et du système de gestion selon la revendication 6, **caractérisé en ce que** le déploiement de la pluralité de radiobalises comprend :
- le calcul d'un barycentre des positions des plates-formes d'atterrissage déployées possédant une diminution de la précision horizontale inférieure à 1 ;
- le calcul d'un rayon d'un cercle centré dans le barycentre en fonction d'une plage radio des radiobalises, une précision de localisation requise au voisinage de la plate-forme d'atterrissage, une taille d'une zone de contrôle autour de l'infrastructure mobile de véhicule aérien sans pilote et du système de gestion dans laquelle le service de localisation est assuré, ladite zone de contrôle étant définie par la plage radio des radiobalises ; et
- la mise en place des radiobalises uniformément espacées dans le cercle calculé.

9. Procédé de déploiement d'une infrastructure mobile de véhicule aérien sans pilote et du système de gestion selon l'une quelconque des revendications précédentes, **caractérisé en ce que** le procédé comprend en outre le déploiement de systèmes de communication à distance pour la communication avec un centre de contrôle à distance qui contrôle et surveille le déploiement de l'infrastructure mobile de véhicule aérien sans pilote et du système de gestion.

10. Procédé de déploiement d'une infrastructure mobile de véhicule aérien sans pilote et du système de gestion selon l'une quelconque des revendications précédentes, dans lequel le déploiement de l'infrastructure mobile de véhicule aérien sans pilote est sélectionné entre un déploiement télécommandé d'une station de contrôle à distance et un déploiement autonome ou une combinaison des deux.
